# EUROPÄISCHE PATENTANMELDUNG

(11) **EP 1 629 940 A2**
(43) Veröffentlichungstag der Anmeldung: **01.03.2006**
(21) Anmeldenummer: 05107746.9
(22) Anmeldetag: 24.08.2005
(51) Int. Cl.: B23Q 11/12, B23Q 11/00, B23Q 11/14

(54) **Temperaturkompensiertes Werkzeug**

(30) Priorität: 24.08.2004 DE 102004040972
(71) Anmelder: BOEHRINGER WERKZEUGMASCHINEN GmbH, D-73033 Göppingen (DE)
(72) Erfinder: Mühlich, Werner, 73079, Süssen (DE); Schreiber, Leo, Dr.-Ing., 73529 Schwäbisch Gmünd (DE)
(74) Vertreter: Alber, Norbert

(57) **Zusammenfassung**

Bei Werkzeugmaschinen - insbesondere bei spanenden Werkzeugmaschinen - besteht das Problem, dass an der Bearbeitungsstelle sehr hohe Temperaturen auftreten, die einerseits das Werkstück und andererseits das Werkzeug einschließlich die das Werkzeug tragenden Bauteile wie die Werkzeugaufnahmeeinheit aufheizen. Daher ist es die Aufgabe der Erfindung, eine Möglichkeit zur Vermeidung und/oder Kompensation von temperaturbedingten Zur Eliminierung bzw. Kompensation der temperaturbedingten Ausdehnung der Werkzeugaufnahmeeinheit, insbesondere des Werkzeugrevolvers (50), einer spanenden Werkzeugmaschine wird die Werkzeugaufnahmeeinheit gekühlt.

## Beschreibung

### I. Anwendungsgebiet

Die Erfindung betrifft eine Werkzeugmaschine sowie ein Verfahren zum Betreiben der Werkzeugmaschine.

### II. Technischer Hintergrund

Bei Werkzeugmaschinen - insbesondere bei spanenden Werkzeugmaschinen - besteht das Problem, dass an der Bearbeitungsstelle sehr hohe Temperaturen auftreten, die dementsprechend einerseits das Werkstück und andererseits das Werkzeug einschließlich die das Werkzeug tragenden Bauteile wie die Werkzeugaufnahmeeinheit aufheizen. Bei einer Drehmaschine ist die Werkzeugaufnahmeeinheit üblicherweise ein Werkzeugrevolver, dessen Revolvergrundkörper über den Umfang verteilt Grundhalter trägt, in denen jeweils ein Klemmhalter mit einem daran befestigten Schneidplättchen oder auch ein angetriebenes Werkzeug aufgenommen ist.

Durch diese Erwärmung werden Wärmedehnungen der gesamten Bauteile bewirkt, die die Maßhaltigkeit des Bearbeitungsergebnisses beeinflussen.

Da die Anforderungen an die Maßhaltigkeit der spanenden Bearbeitung ständig steigen, und derzeit im Genauigkeitsbereich von wenigen µm liegen, können derartige temperaturbedingte Dehnungen ohne Gegenmaßnahmen nicht mehr hingenommen werden.

Das Problem tritt prinzipiell bei allen spanenden Werkzeugmaschinen mit bestimmter Schneide auf, stellt jedoch insbesondere beim Drehen ein Problem dar, da hier ein und dieselbe, vom Volumen her sehr kleine Schneidkante des Werkzeuges über längere Zeit am Werkstück in Eingriff bleibt und sich entsprechend stark aufheizt.

Demzufolge erwärmt sich auch die Werkzeugaufnahmeeinheit, insbesondere des Werkzeugrevolver, entsprechend stark und ungleichmäßig, nämlich besonders stark an dem Umfangsbereich des im Eingriff befindlichen Werkzeuges.

Im Folgenden ist an Stelle einer Werkzeugaufnahmeeinheit zur Vereinfachung in der vorliegenden Anmeldung generell nur noch von einem Werkzeugrevolver die Rede, ohne die Erfindung hierauf, insbesondere auch nicht auf Drehmaschinen allein, zu beschränken.

In der Vergangenheit wurde versucht, diese Temperaturdehnung zu vermeiden, indem die Bearbeitungsstelle mittels eines permanent aufgebrachten Kühl/Schmiermittels gekühlt wurde, welches die Schneidkante des Werkzeuges und den gesamten Werkzeugrevolver ebenso bespülte wie die Werkstückoberfläche.

Aufgrund der sich dadurch ergebenden Benetzung der Späne mit dem Kühl/Schmiermittel und der damit einhergehenden hohen Entsorgungskosten für die Späne wird jedoch mehr und mehr zu einer trockenen Zerspanung ohne Kühl/Schmiermittel übergegangen.

### III. Darstellung der Erfindung

### a) Technische Aufgabe

Es ist daher die Aufgabe gemäß der Erfindung, eine Möglichkeit zur Vermeidung und/oder Kompensation von temperaturbedingten, die Maßhaltigkeit des Bearbeitungsergebnisses beeinträchtigenden, Dehnungen von Maschinenkomponenten und/oder des Werkstückes zu schaffen.

### b) Lösung der Aufgabe

Diese Aufgabe wird durch die Merkmale der Ansprüche 1 und 9 gelöst. Vorteilhafte Ausführungsformen ergeben sich aus den Unteransprüchen.

Das Problem kann auf zwei unterschiedliche Arten oder auch durch deren Kombination gelöst werden:

In erster Linie wird versucht, die unerwünschte Wärmedehnung des Werkzeugrevolvers gar nicht auftreten zu lassen bzw. so gering wie möglich zu halten, indem eine Kühlung, speziell eine Innenkühlung, des Werkzeugsrevolvers, insbesondere des Grundkörpers und/oder des Grundhalters und/oder des Klemmhalters, vorgenommen wird.

Dabei wird eine Innenkühlung mittels Fluid von innen nach außen, also von den größeren zu den kleineren, lösbar befestigten, Einheiten natürlich immer aufwändiger, bedingt durch Platzprobleme und Dichtungsprobleme. Da zusätzlich die durch einen Temperaturanstieg bewirkte Dehnung mit abnehmender radialer Erstreckung der Komponenten, die vom Grundkörper aus über Grundhalter zum Klemmhalter und zum Schneidplättchen immer geringer wird, ebenfalls geringer wird, wird in einer bevorzugten Ausführungsform nur der Grundkörper, bestenfalls noch der Grundkörper und die Grundhalter, gekühlt.

Ein guter Mittelweg stellt die Kühlung nur des Grundkörpers dar, jedoch mit Kühlkanälen, die bis in den radialen Bereich zwischen die Grundhalter hineinreichen.
Dies kann mittels eines geschlossenen Kühlkreislaufes mit z. B. flüssigem Kühlmittel geschehen. Die Rückkühlung bzw. ein eventuell benötigtes Reservoir für das Kühlmittel befindet sich dabei vorzugsweise außerhalb des Werkzeugrevolvers, vorzugsweise z. B. im oder am Grundgestell der Werkzeugmaschine.

Die Kühlung kann auch durch einen offenen Kühlluftstrang, durchströmt beispielsweise von Druckluft, geschehen, da die dann frei austretende Druckluft kaum nachteilige Wirkungen wie Verschmutzung oder Ähnliches, weder bezüglich des Werkstückes noch der entstehenden Späne, entfaltet.

Die aus dem Werkzeugrevolver austretende Kühlluft könnte dann zusätzlich auch zum Anströmen und damit Kühlen der Bearbeitungsstelle und/oder Entfernen der Späne von der Bearbeitungsstelle verwendet werden, was in der Vergangenheit teilweise bereits benutzt wurde, jedoch wurde dabei nicht auf eine großflächige und gleichförmige Durchdringung mit Kühlkanälen abgestellt, die erst einen guten Kühleffekt ergibt.

Ein weiterer Vorteil dieser Lösung ist das geringere Problem der Abdichtung, z. B. zwischen den einzelnen Teilen des Werkzeugrevolvers, da eine geringfügig austretende Fehlluft unschädlich ist.

In der einfachsten Ausführungsform wird der Werkzeugrevolver permanent gekühlt, ohne das Ausmaß der Notwendigkeit bzw. das Ausmaß der Kühlung zu kontrollieren und zu steuern.

Als Weiterentwicklung wird das Ergebnis der Kühlmaßnahme überwacht, indem entweder die Temperatur des Kühlmediums und/oder die Temperatur einer oder mehrerer der Komponenten des Werkzeugrevolvers gemessen wird. Dabei wird in der Regel mindestens die Temperatur des Werkzeugrevolvers, vorzugsweise an mehreren Stellen über den Umfang verteilt und ggf. auch an mehreren radial verschiedenen Stellen, überwacht als auch bevorzugt zusätzlich die Temperatur des Grundhalters und/oder des Klemmhalters.

In einer bevorzugten Ausführungsform wird das Maß der Kühlung gesteuert in Abhängigkeit von der festgestellten Temperatur am Werkzeugrevolver.

Die Ermittlung der von der Temperatur bewirkten Dehnung und deren Verwendung als Basisgröße für die Steuerung ist in der Praxis nicht möglich bzw. nur sehr aufwendig möglich, da zum einen eine eindeutige, auch zeitlich eindeutige, Korrelation zwischen den beiden Parametern nicht gegeben ist und damit eine Berechnung aufgrund der Temperaturwerte nicht möglich ist und zum anderen die direkte Bestimmung der Temperaturdehnung mittels Vermessung der Komponenten gegenüber einem Referenzpunkt bei diesen Genauigkeitsanforderungen fast nicht machbar ist.

Die Temperaturermittlung kann kontaktlos geschehen, etwa durch einen auf die Abtaststelle gerichteten Infrarotsensor, der beispielsweise gegenüberliegend am Grundgestell der Werkzeugmaschine angeordnet sein kann oder auch durch einen kontaktierenden, konventionellen Temperatursensor.

Am Revolvergrundkörper sind dabei mehrere Abtaststellen notwendig, beispielsweise über den Umfang des Grundkörpers verteilt, da die Temperatur des Grundkörpers sich über dessen Umfang stark ändert je nach Entfernung von dem im Einsatz befindlichen Werkzeug.

Ein konventioneller, kontaktierender Temperatursensor kann daher auch ringförmig koaxial auf dem Grundkörper angeordnet sein, und dadurch die Maximalposition auf diesem Umfang messen.

Auch radial unterschiedlich beabstandete Abtaststellen sind von Vorteil.

Auch eine Temperaturmessung an verschiedenen Komponenten, also beispielsweise am Revolvergrundkörper einerseits und/oder dem Grundhalter und/oder dem Klemmhalter andererseits sind von Vorteil, da von der Temperatur an einer der Komponenten nicht unbedingt auf die Temperatur an der angrenzenden anderen Komponente geschlossen werden kann.

Für die kontaktlose Temperaturermittlung mittels Infrarotsensor wird vorzugsweise auf jede der Abtaststellen ein separater Infrarotsensor gerichtet, wobei ein Sensor für alle Grundhalter bzw. für alle Klemmhalter ausreichend sein kann, indem z. B. die Temperatur des Grundhalters bzw. Klemmhalters immer nur gemessen wird in derjenigen Position des Revolvers, die er nach dem Einschwenken des nächsten benötigten Werkzeuges in die Arbeitsposition, jedoch noch vor dem Anfahren der Bearbeitungsstelle, immer gleich einnimmt.

Auf diese Art und Weise kann vor und nach dem Einsatz jedes einzelnen Werkzeuges die Temperatur gemessen werden, und selbst wenn für das Durchführen der Temperaturmessung ein kurzzeitiges Stillstehen des Revolvers erforderlich ist, bewegt sich dies im Bereich von Sekundenbruchteilen, während weitere Zeitverzögerungen durch Anfahren einer besonderen Messposition nicht notwendig sind.

Da die Temperaturveränderung einer der Komponenten sich in der Regel über mehrere Einsatzzyklen von Werkzeugen hinzieht, ist eine solche Temperaturmessung zwischen dem Einsatz der verschiedenen Werkzeuge in der Regel ausreichend. Die Temperaturmessungen am Schneidplättchen oder nahe am Schneidplättchen, beispielsweise dem Klemmhalter, können durch Vergleich mehrerer analoger Messungen hintereinander, betreffend das gleiche Werkzeug, auch zur anderweitigen Analyse des Bearbeitungsvorganges, beispielsweise des Erkennens eines Werkzeugverschleißes, benutzt werden.

Die zweite Möglichkeit besteht in der Kompensation der tatsächlich auftretenden Temperaturdehnung durch eine Kompensationsbewegung der das bzw. die Werkzeuge tragenden Einheit, insbesondere also des den Werkzeugrevolver tragenden Werkzeugsupportes.

Die Kompensationsbewegung ist damit der unerwünschten Wärmedehnungsrichtung, also beispielsweise der radialen Richtung des Werkzeugrevolvers, entgegen gerichtet und wird von der zentralen Maschinensteuerung aufgrund der wie zuvor beschriebenen gemessenen Temperaturmessungen ermittelt und ausgelöst.

Die dritte Möglichkeit ist die Kombination der ersten beiden Möglichkeiten, also Vermeidung von Wärmedehnungen am Werkzeugrevolver soweit als möglich einerseits und Kompensation der dennoch stattfindenden Wärmedehnung andererseits.

Dabei ist zu berücksichtigen, dass die Anordnung einer Kühlvorrichtung in den einzelnen Komponenten des Werkzeugrevolvers radial von innen nach außen immer schwerer und damit aufwändiger wird und gleichzeitig die Wirkung eines Temperaturanstiegs in diesen Komponenten radial von innen nach außen abnimmt. Weiter muss bedacht werden, dass der Wärmeübergang zwischen den einzelnen Komponenten sehr unterschiedlich ist und nur empirisch ermittelt werden kann.

In einer ersten bevorzugten Ausführungsform wird daher nur der Revolvergrundkörper gekühlt, insbesondere mittels eines flüssigen Kühlmediums und mittels eines geschlossenen Kühlkreislaufes.

Das Maß der Kühlung wird gesteuert mittels der am Revolvergrundkörper und/oder an dem Kühlmedium gemessenen Temperatur, indem diese Temperatur innerhalb eines etwa 5° C, insbesondere nur etwa 2° C, breiten Temperaturkorridors gehalten wird. Zu diesem Zweck wird die das Kühlmittel transportierende Pumpe ein- und ausgeschaltet oder anderweitig der Mengendurchsatz an Kühlmittel durch den Revolvergrundkörper verändert.

Falls die Temperatur des Grundkörpers gemessen wird, geschieht dies vorzugsweise mittels Infrarotsensor, insbesondere an zwei radial beabstandeten Abtaststellen, die jedoch beide zwischen dem Zentrum des Revolvergrundkörpers und dem im Einsatz befindlichen Werkzeug liegen, und die gemessen werden nach dem Einschwenken des Werkzeuges, jedoch vor dem Kontaktieren des Werkstückes durch dieses Werkzeug bzw. in analoger Weise nach dem Außereingriffbringen dieses Werkzeuges vom Werkstück.

In gleicher Weise wird durch weitere Infrarotsensoren dabei auch die Temperatur des Klemmhalters gemessen und/oder auch die Temperatur des Grundhalters.

Da sich die Temperatur gerade des Klemmhalters periodisch schnell und stark ändern kann, selbst wenn die Temperatur des Grundkörpers aufgrund Kühlung sehr gut konstant gehalten wird, wird die gemessene Temperatur des Klemmhalters und/oder Grundhalters durch entsprechende Kompensationsbewegungen des Werkzeugsupports ausgeglichen.

Die Bestimmung der Temperatur des Grundhalters zusätzlich zu der des Klemmhalters ist beispielsweise deshalb sinnvoll, weil ein überproportionaler Anstieg der Temperatur des Klemmhalters unterschiedliche Ursachen haben könnte:

Zum einen ein bereits eingetretener Verschleiß der im Einsatz befindlichen Schneidkante des Schneidplättchens und damit einhergehender Anstieg der Zerspanungskraft oder auch ein sehr schlechter Temperaturübergang zwischen Klemmhalter und Grundhalter, der ein Abführen der Wärme vom Klemmhalter verhindert und einen Temperaturstau im Klemmhalter bewirkt.

Bei einer anderen bevorzugten Ausführungsform erfolgt die Kühlung mittels eines offenen Kühlkreislaufes durch Druckluft. Da hierbei die auftretenden Dichtigkeitsprobleme geringer sind, wird von der Druckluft nicht nur der Revolvergrundkörper, sondern zumindest auch der im Einsatz befindliche Grundhalter, insbesondere alle Grundhalter, durchströmt.

Auf diese Art und Weise wird die Temperatur des Grundkörpers und/oder wenigstens des im Einsatz befindlichen Grundhalters innerhalb eines vorgesehenen Temperaturkorridors, der wiederum etwa 5° C breit sein kann, vorzugsweise nur 2° C breit, gehalten.

Der Klemmhalter wird von innen gar nicht gekühlt, ggf. jedoch durch die aus dem Grundhalter oder dem Grundkörper ausströmende und ihn anströmende Druckluft. Die Temperatur des Klemmhalters wird gemessen und in eine Kompensationsbewegung umgesetzt.

Da Grundkörper und Grundhalter nacheinander von der gleichen Druckluft durchströmt werden, ist es möglich, dass beide Komponenten gleichzeitig nicht innerhalb ihres Zielkorridors gehalten werden können, vor allem bei zeitlich sich sehr schnell ändernden Temperatureinflüssen. In diesem Fall ist die bevorzugte Steuerungsgröße die Temperatur des Grundkörpers, da dessen Dehnung die größten Auswirkungen auf die Maßhaltigkeit des Bearbeitungsergebnisses hat.

Die beschriebenen Maßnahmen sind dann besonders wirkungsvoll, wenn die an der Bearbeitungsstelle auftretende hohe Temperatur, die auf alle im Arbeitsraum befindlichen Komponenten einwirkt, die übrigen, die Maßhaltigkeit mitbestimmenden, Komponenten der Werkzeugmaschine wie das Maschinenbett, die darauf aufgebrachten Führungen für die Supporte und die Supporte mit ihren Schlitten selbst, möglich wenig beeinflussen kann.

Um dies zu erreichen, sind die beschriebenen Maßnahmen dann besonders wirkungsvoll, wenn diese Komponenten so vollständig und dicht wie möglich von Abdeckungen geschützt sind, die nicht nur vor Verschmutzung durch Späne schützen, sondern auch ein isolierendes, nicht erwärmtes Luftpolster zwischen den Abdeckungen und den betreffenden Komponenten halten.

Auch das Bett durchdringende Kühlöffnungen dienen dem gleichen Zweck.

### c) Ausführungsbeispiele

Ausführungsformen gemäß der Erfindung sind im Folgenden beispielhaft näher beschrieben. Es zeigen:
- Fig. 1:: eine Werkzeugmaschine in der Seitenansicht,
- Fig. 2:: eine vergrößerte Detaildarstellung der Fig. 1,
- Fig. 3:: eine Frontansicht der Werkzeugmaschine gemäß Fig. 1 und
- Fig. 4:: Detaildarstellungen aus der Fig. 3.

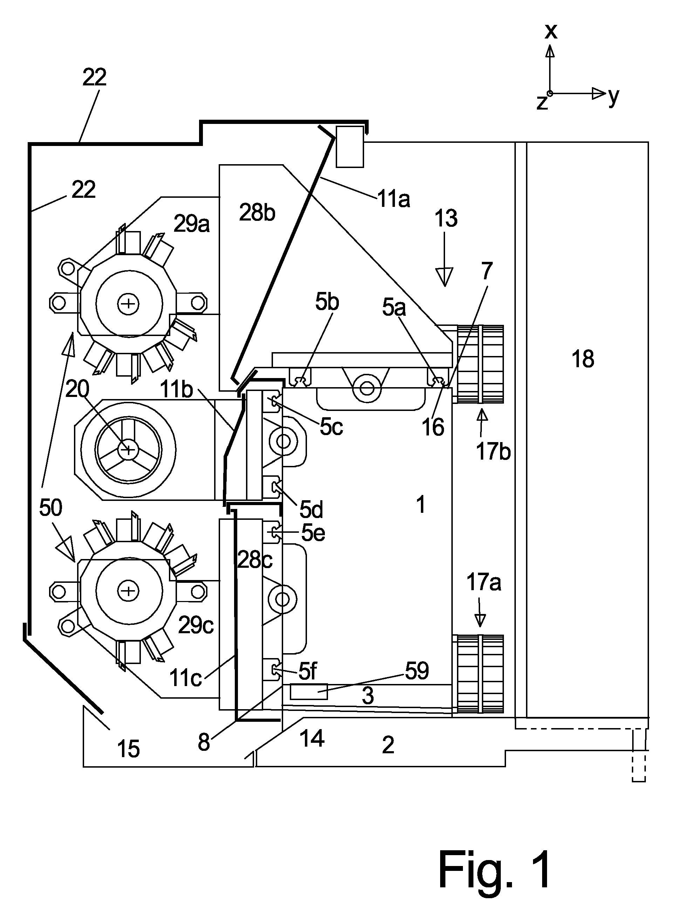

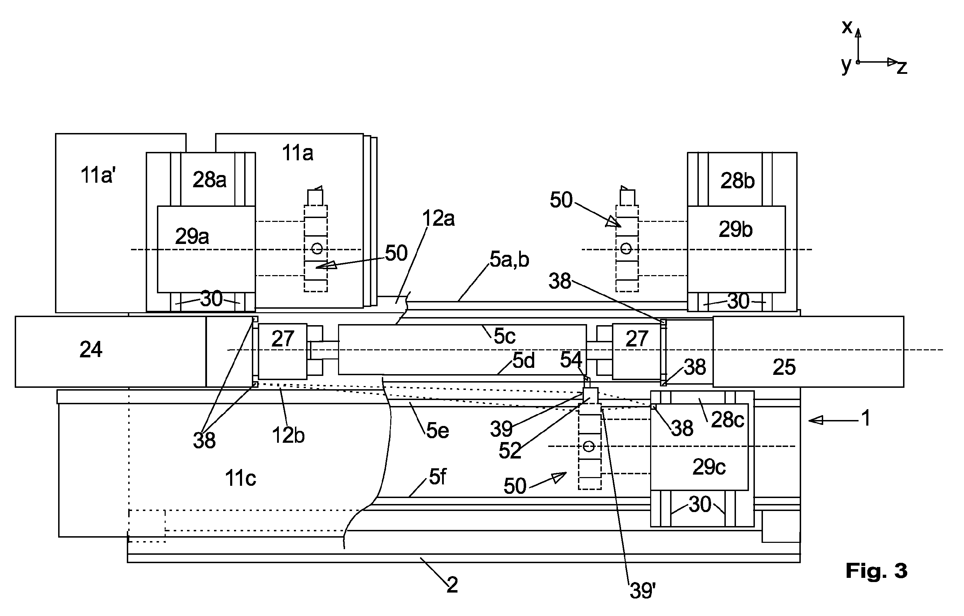

Eine Drehmaschine, anhand deren die Erfindung beispielhaft dargestellt wird, zeigt die Fig. 1 in der Seitenansicht, also betrachtet in Richtung der Drehmitte 20 und damit der Rotationsachse des (nur in der Fig. 3 dargestellten) Werkstückes 4 und die Fig. 3 in der Frontansicht.

An einem hochkant stehenden, quaderförmigen Bett 1 sind dabei sowohl auf der Oberseite 7 in Z-Richtung verlaufende Führungsbahnen 5a, b als auch entlang der Frontseite 8 zwei übereinander angeordnete, ebenfalls in Z-Richtung verlaufende Paare von Führungsbahnen 5c, d und 5e, f angeordnet.

An den beiden Führungen 5c,d am oberen Ende der Frontseite 8 ist der verschiebbare Reitstock 25, in diesem Fall ausgestattet mit einem Spannfutter 27, in Z-Richtung verschiebbar angeordnet und gegenüberliegend der Spindelstock 24 mit dem darauf aufgesetzten Spannfutter 27, zwischen welchen das Werkstück 4 drehend antreibbar um die Drehmitte 20 gehalten wird.

Auf dem unteren Paar von Führungsbahnen 5e, f der Frontseite 8 als auch den Führungsbahnen 5a, b auf der Oberseite 7 laufen Werkzeugsupporte, in diesem Fall auf den Führungen der Oberseite 7 sogar zwei Werkzeugsupporte.

Diese umfassen jeweils einen in Z-Richtung verfahrbaren Längsschlitten, beispielsweise die oberen Längsschlitten 28a, b und den unteren Längsschlitten 28c, sowie einen darauf laufenden oberen bzw. unteren Querschlitten 29a, b bzw. 29c, der jeweils einen Werkzeugrevolver 50 trägt.

Der Arbeitsraum 31 der Maschine wird von Arbeitsraumabdeckungen 22 nach außen abgeschottet.

Gegenüber den Führungen 5 der Frontseite 8 als auch der Oberseite 7, und auch insgesamt gegenüber dem Bett 1 ist der Arbeitsraum 31 mittels vorzugsweise thermisch isolierter, plattenförmiger innerer Arbeitsraum-Abdeckungen 11a,b,c abgedeckt, die in geringem Abstand vor den Führungen bzw. dem Bett verlaufen, und mit den beweglichen Komponenten mit bewegbar sind. Da diese Abdeckungen dicht aneinander gleiten, ist der Wärmeaustausch über die Luft vom Arbeitsraum 31 und der Luft zwischen den Abdeckungen 11 und dem Bett bzw. den Führungen relativ gering, und auch die Wärmestrahlung von der Bearbeitungsstelle in Richtung auf diese Komponenten wird durch die Abdeckungen 11 zuverlässig abgehalten.

An der Rückseite 13 des Bettes 1 sind Kabelschleppvorrichtungen 17a, b zur Versorgung der beweglichen Komponenten, insbesondere der Werkzeugsupporte, der Maschine mit Energie und Steuerungssignalen angeordnet.

Mit seiner Unterseite 9 sitzt das Bett 1 auf einer Grundplatte 2 auf, auf welcher hinter dem Bett 1 auch die Schaltschränke 18 mit den Energieversorgungseinrichtungen 19 angeordnet sind.

Unter dem Arbeitsraum fallen die Späne in einen üblichen Späneförderer 15.

An dieser beispielhaft beschriebenen, bereits bekannten Bauform einer Werkzeugmaschine zeigt Fig. 3 an der dem Werkstück zugewandten Frontseite des Spindelstockes 24 zwei Infrarotsensoren 38, die auf den Grundhalter 52 des gerade im Einsatz befindlichen Schneidplättchens 54 oder den Bereich des Revolver-Grundkörpers 31 nahe diesem Werkzeughalter oder auf das im Einsatz befindliche Schneidplättchen 54 selbst zielen.

Da bei dieser Maschine Werkzeugrevolver 50 sowohl auf der positiven als auch der negativen X-Seite der Drehmitte 20 angeordnet sind und somit das Werkstück von beiden Seiten bearbeitet werden kann, ist auch auf beiden Seiten der Drehmitte jeweils mindestens ein Infrarotsensor 38 angeordnet, in der Regel sogar für jede Abtaststelle 39 ein eigener Infrarotsensor 38.

Ebenso könnte ein solcher Infrarotsensor 38 auch jeweils auf dem den Werkzeugrevolver 50 unmittelbar tragenden Schlitten, in diesem Fall dem X-Schlitten, angeordnet sein und damit auf eine Abtaststelle 39' gerichtet, die der zuvor beschriebenen Abtaststelle 39 bezüglich der Hauptebene des Werkzeugrevolvers 50 gegenüberliegt. In diesem Fall müsste jeder einen Revolver 31 tragende z. B. Querschlitten 29a, b, c mit einem solchen Sensor 38 ausgestattet werden.

Jedoch sind auch bei der zuvor beschriebenen Lösung der Anbringung des wenigstens einen Sensors am Spindelstock 24 oder einem anderen, insbesondere ortsfesten, Teil der Werkzeugmaschine weitere Sensoren notwendig, z. B. angeordnet am Reitstock 25, um auch diejenigen Bearbeitungspositionen erfassen zu können, die den gegenüberliegenden Sensoren verborgen sind.

Die Infrarotsensoren 38 ermitteln unmittelbar die Temperatur der Abtaststelle 39 bzw. 39', also je nach gewählter Abtaststelle des im Einsatz befindlichen oder unmittelbar zuvor im Einsatz gewesenen oder in Einsatz zu bringenden Schneidplättchens 54, dessen Grundhalter 52, Klemmhalter 53 oder des Schneidplättchens 54, dessen Grundhalter 52, Klemmhalter 53 oder des Revolvergrundkörpers 51, insbesondere nahe des Grundhalters 52.

Alternativ kann auch ein ebenfalls auf Entfernung ohne Kontakt mit der Abtaststelle einsetzbarer optischer Sensor verwendet werden, der dann allerdings nur temperaturbedingte Farbveränderungen feststellt, wie sie allerdings nur bei hohen Temperaturen auftreten und deshalb nur am Schneidplättchen 54 selbst.

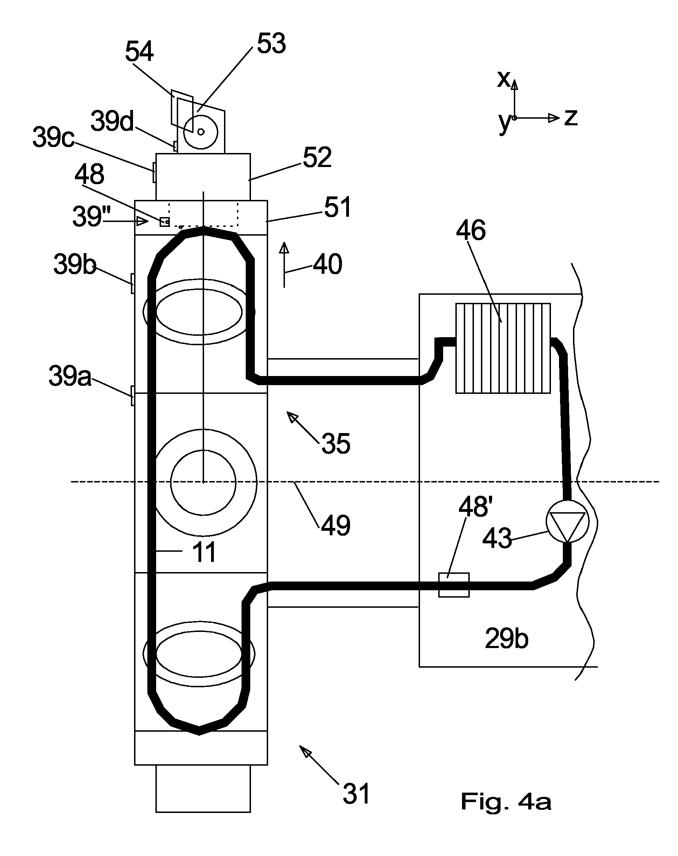

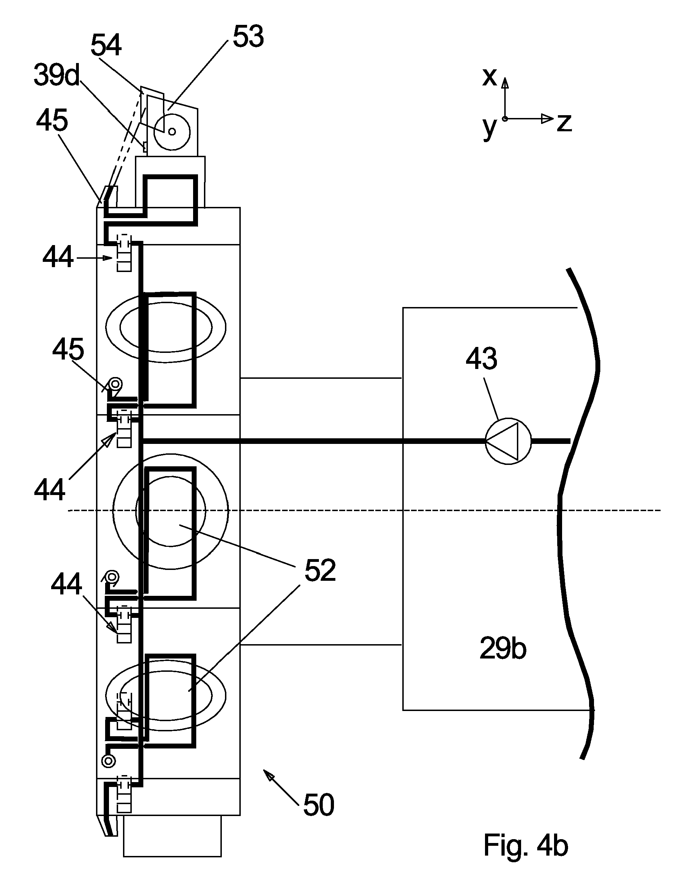

Die Temperaturbestimmung dient entweder der Kontrolle der Temperatur oder der direkten Ansteuerung einer Kühlvorrichtung 35, deren Ziel es ist, die in den Figuren 4 dargestellte radiale Dehnung des Werkzeugrevolvers 31 in Dehnungsrichtung 40 zu vermeiden, damit die Bearbeitungsgenauigkeit der Werkzeugmaschine bestehen bleibt.

Alternativ kann stattdessen - siehe Fig. 4a - auch direkt an der Abtaststelle 39" ein konventioneller, den Kontakt mit der Abtaststelle benötigender, Temperatursensor 48 angeordnet sein, was den Nachteil besitzt, dass dies nur eine punktuelle und bezüglich des Werkzeugrevolvers festgelegte Stelle Messstelle darstellt und damit bei Temperaturmessung am Grundhalter 42, beispielsweise an jedem in Frage kommenden Grundhalter 42, also zumindest bei allen die Bearbeitungsqualität des Werkstückes bestimmenden Schneidplättchen 54 und deren Grundhaltern 42, ein solcher Sensor 48 angeordnet werden muss.

Wird eine Temperaturmessung auf diese Art am Revolver-Grundkörper 51 durchgeführt, so sind auch hierbei in der Regel über dessen Umfang verteilt mehrere Sensoren 48 notwendig, und darüber hinaus meist auch auf mehreren, radial unterschiedlich zum Zentrum beabstandeten, Ringbereichen, was vor allem den Aufwand für Anbringung, Verkabelung, Auswertung usw. in die Höhe treibt.

Die Kühlvorrichtung 35 soll dabei im Inneren des Revolvers 31 angeordnet sein, in dem ein wärmeabtransportierendes Fluid durch entsprechende Kühlleitungen **11 den Grundkörper 51 des Revolvers 50 durchströmt.**

Fig. 4a zeigt in der Frontseite vergrößert einen entsprechend ausgestattetem Revolver 50, wobei die Kühlleitungen 11 symbolisch sich über den gesamten Umfang des Revolvergrundkörpers 51 erstreckend dargestellt sind.

Der tatsächliche Verlauf hängt von den übrigen funktionalen Bestandteilen im Inneren des Revolvergrundkörpers 51 ab, die von den Kühlleitungen 11 nicht erreicht werden dürfen.

Im Beispiel der Fig. 4a bilden die Kühlleitungen 11 einen geschlossenen Kühlkreislauf, der sich in den den Revolver 50 tragenden Schlitten, in diesem Fall den Querschlitten 29b, hineinerstrecken, da dort wegen der weniger beengten Platzverhältnisse beispielsweise die Pumpe 43 und der Rück-Kühler 46 für das Kühlmedium, beispielsweise ein Kältemittel oder Hydrauliköl, untergebracht sind.

Beides könnte auch außerhalb des Supports, z. B. an der Rückseite der Maschine, angeordnet sein.

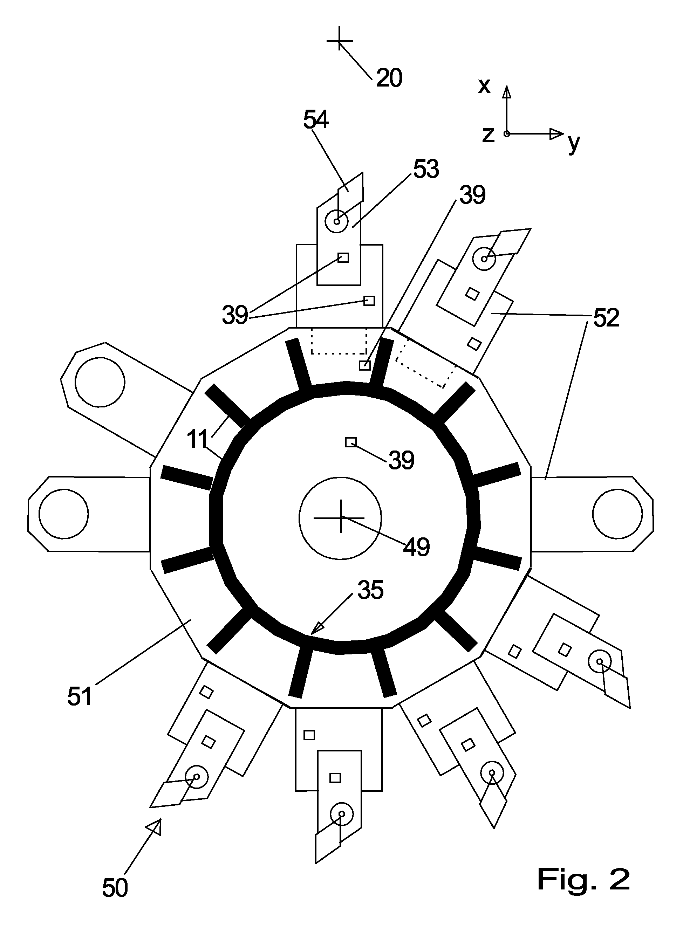

Fig. 2 zeigt in der Frontansicht den Revolver 50, dessen Kühlleitungen 11 dabei so angeordnet sind, dass das Kühlmittel möglichst nahe an die potentiellen Temperatur-Einbringungsstellen, die Grundhalter 42, herangeführt wird.

Dabei erstrecken sich die Kühlleitungen 11 im gesamten Umfang des Revolvergrundkörpers 51 gleichmäßig, wobei vom Kühlmedium entweder alle Kühlleitungen 11, also die allen Grundhaltern 42 zugeordneten Stränge der Kühlleitung, jeweils gleichzeitig durchströmt werden, oder mittels Ventilschaltungen nur ein oder mehrere Äste der Kühlleitungen 11 zu dem im Einsatz befindlichen Werkzeughalter 42 hin geöffnet sind.

Die Kühlleitungen durchströmen zwar nur den Revolver-Grundkörper 51, reichen dabei jedoch möglichst nahe an die Grundhalter 42 heran, und insbesondere radial so weit nach außen, dass sie selbst in dem Bereich zwischen die Grundhalter 42 hineinragen, so dass der Bereich, in dem der Grundkörper 51 von dem im Einsatz befindlichen Grundhalter 42 erwärmt wird, möglichst gering gehalten wird, und auch die im Grundkörper 51 erfolgende Temperaturerhöhung.

Zur Kontrolle wird die Temperatur des Kühlmediums mittels eines Temperatursensors 48' im Kühlkreislauf erfasst und/oder die Temperatur an den Abtaststellen 39a, b des Grundkörpers 51.

Zusätzlich wird die Temperatur an der Abtaststelle 39c am Grundhalter 52 als auch an einer Abtaststelle 39d am Klemmhalter 53 gemessen, und zumindest hieraus eine Kompensationsbewegung errechnet und mittels der Schlitten des Werkzeugsupports so durchgeführt, dass hierdurch die Dehnung des Klemmhalters 53 bzw. Grundhalters 52 in radialer Richtung des Revolvers 50 ausgeglichen wird, ggf. auch die noch verbleibende Dehnung des Grundkörpers 51, falls trotz der Kühlung der Grundkörper 51 nicht ganz oder nicht immer im vorgegebenen Temperaturbereich gehalten werden kann.

Im Gegensatz zu diesen geschlossenen Kühlkreisläufen zeigt Fig. 4b einen offenen Kühlkreislauf, in dem deshalb auch ein anderes Kühlmedium, nämlich vorzugsweise Druckluft, verwendet wird:

Nach Durchlaufen der Kühlleitungen 11 im Grundkörper 51 des Werkzeugrevolvers 50 strömt die Druckluft über meist als Düsen 45 gestaltete Austrittsöffnungen ins Freie.

Die Düsen 45 sind dabei vorzugsweise jeweils auf die Spitze des in dem Klemmhalter 53 befindliche Schneidplättchen 54 gerichtet, so dass vorzugsweise jedem Grundhalter 42 eine eigene Düse 45, meist am Grundkörper 51, zugeordnet ist.

Vorzugsweise sind über entsprechende Ventile 44, die jeder Düse 45 zugeordnet sind, alle Düsen 45 geschlossen, bis auf die Düse, welche auf das im Einsatz befindliche Schneidplättchen 54 hin gerichtet ist.

Da bei Druckluft ein geringfügiges Austreten an unerwünschten Stellen weniger nachteilig ist als bei einem flüssigen Kühlmedium, werden bei dieser Variante die Kühlleitungen 11 vom Grundkörper 51 aus vorzugsweise auch in die Grundhalter 52, ggf. sogar in die Klemmhalter 53 geführt und damit diese Komponenten ebenfalls gekühlt.

Gemäß Fig. 4b werden zusätzlich zum Grundkörper 51 nur die Grundhalter 52 durchströmt. Falls jeder Düse 45 zugeordnet ein Ventil 44 vorhanden ist, zweigt vorzugsweise der sich in den Grundhalter 52 hinein erstreckende Ast bzw. Kreis der Kühlleitung 11 erst stromabwärts des Ventils 44 ab.

Will man dagegen erreichen, dass ständig wie der Grundkörper 51, auch sämtliche Grundhalter 52 durchströmt und gekühlt werden, sind eventuell vorhandene Ventile 44 erst stromabwärts der die Grundhalter 52 durchströmenden Kanäle angeordnet, wie in der unteren Bildhälfte der Fig. 4b dargestellt.

Dieser offene Kühlkreislauf kann mit dem entweder in der Maschine bereits vorhandenen Druckluftsystem oder einem extern in der Regel verfügbaren Druckluftsystem versorgt werden, so dass keine zusätzliche Druckluftaufbereitung innerhalb der Maschine erfolgen muss.

### BEZUGSZEICHENLISTE

- 1: Bett
- 2: Grundplatte
- 3: Werkzeug
- 4: Werkstück
- 5a, b, c, d: Führungsbahnen
- 7: Oberseite
- 8: Frontseite
- 9: Unterseite
- 10: Vertiefungen
- 11: Arbeitsraumabdeckung innen
- 12: Hydraulikkreislauf
- 13: Rückseite
- 14: Abschrägung
- 15: Späneförderer
- 16: Führungsschuh
- 17: Kabelschleppvorrichtung
- 18: Schaltschränke
- 19: Energieversorgungs-Einrichtung
- 20: Drehmitte
- 22: Arbeitsraumabdeckung außen
- 24: Spindelstock
- 25: Reitstock
- 26: Pinole
- 27: Spannfutter
- 28a,b: oberer Längsschlitten
- 28c: unterer Längsschlitten
- 29a. b: oberer Querschlitten
- 29c: unterer Querschlitten
- 30: Querführungen
- 31: Arbeitsraum
- 35: Kühlvorrichtung
- 36: geschlossener Kühlkreislauf
- 37: offener Kühlkreislauf
- 38: Infrarotsensor
- 39a, b: Abtaststelle
- 40: Dehnungsrichtung
- 41: Kontaktstelle
- 42: Kühlleitung
- 43: Pumpe
- 44: Ventil
- 45: Düse
- 46: Rückkühler
- 47: Positionssensor
- 48: Temperatursensor
- 49: Schwenkachse
- 50: Werkzeugrevolver
- 51: Revolver-Grundkörper
- 52: Grundhalter
- 53: Klemmhalter
- 54: Schneidplättchen
- T: Tank

## Patentansprüche

1. Verfahren zur Eliminierung bzw. Kompensation der temperaturbedingten Ausdehnung der Werkzeugaufnahmeeinheit, insbesondere des Werkzeugrevolvers (50), einer spanenden Werkzeugmaschine
**dadurch gekennzeichnet, dass**
die Werkzeugaufnahmeeinheit, insbesondere der Werkzeugrevolver (31), gekühlt, insbesondere durch eine im Inneren des Werkzeugrevolvers liegende Kühlvorrichtung (35) gekühlt wird.

2. Verfahren nach Anspruch 1,
**dadurch gekennzeichnet, dass**
- die Kühlvorrichtung (35) einen geschlossenen Kühlkreislauf (36), insbesondere betrieben mit einem flüssigen Kühlmittel, umfasst, und/oder insbesondere
- die innen liegende Kühlvorrichtung (35) einen offenen Kühlkreislauf (36), insbesondere betrieben mittels Druckluft als Kühlmittel, umfasst.

3. Verfahren nach einem der vorhergehenden Ansprüche,
**dadurch gekennzeichnet, dass**
- das Maß der Kühlung insbesondere bei einem geschlossenen Kühlkreislauf (36) durch Steuern der Pumpe (43) und/oder Einschalten des Rückkühlers für das Kühlmittel im Kühlkreislauf (36) erfolgt, und/oder insbesondere
- das Maß der Kühlung bei einem offenen, insbesondere luftbetriebenen, Kühlkreislauf durch Steuern der Öffnungsdauer des Ventils (44) für das Zuführen von Druckluft erfolgt.

4. Verfahren nach einem der vorhergehenden Ansprüche,
**dadurch gekennzeichnet, dass**
die Kühlung in Abhängigkeit von der an dem Werkzeugrevolver (50), insbesondere dessen gekühlten Komponenten, und/oder der Temperatur des Kühlmittels gesteuert wird.
(Kompensieren sowie Kombination mit Kühlen:)

5. Verfahren zur Eliminierung bzw. Kompensation der temperaturbedingten Ausdehnung der Werkzeugaufnahmeeinheit, insbesondere des Werkzeugrevolvers (50) einer spanenden Werkzeugmaschine, insbesondere nach einem der vorhergehenden Ansprüche,
**dadurch gekennzeichnet, dass**
die auftretende Dehnung der Werkzeugsaufnahmeeinheit, insbesondere des Werkzeugrevolvers (31), insbesondere in radialer Richtung und/oder axialer Richtung kompensiert wird durch entsprechende automatische Kompensationsbewegungen der Werkzeugaufnahmeeinheit, insbesondere des Werkzeugrevolvers (31), entgegen der Dehnungsrichtung (40).

6. Verfahren nach Anspruch 5,
**dadurch gekennzeichnet, dass**
- das Maß der Kompensationsbewegung in Abhängigkeit des Ausmaßes der Kühlung und/oder in Abhängigkeit der am Werkzeugrevolver (50), insbesondere dessen Komponenten, und/oder der am Schneidplättchen (54) gemessenen Temperatur festgelegt, insbesondere in periodischen Abständen oder in den gleichen Phasen des Bearbeitungsablaufes, festgelegt und durchgeführt wird, und/oder insbesondere
- die Temperaturermittlung kontaktlos, insbesondere mittels eines auf die mindestens eine Abtaststelle (39) gerichteten Infrarotsensors (38), erfolgt.

7. Verfahren nach einem der vorhergehenden Ansprüche,
**dadurch gekennzeichnet, dass**
- die Temperaturermittlung kontaktierend durch Temperatursensoren (48) an den einzelnen Komponenten des Werkzeugrevolvers (50) erfolgt, und/oder insbesondere
- die Bestimmung der Temperatur durch Ermittlung der Farbveränderung, insbesondere kontaktlose Ermittlung der Farbveränderung, von Teilen der Werkzeugmaschine, insbesondere des Schneidplättchens (54) und/oder des Werkstückes (4), insbesondere der bearbeiteten Werkstückfläche, erfolgt.

8. Verfahren nach einem der vorhergehenden Ansprüche,
**dadurch gekennzeichnet, dass**
- die übrigen an den Arbeitsraum angrenzenden, die Maßhaltigkeit des Bearbeitungsergebnisses mitbestimmenden, Komponenten der Maschine, insbesondere das Bett (1), die Führungen (5) für die Werkzeugsupporte sowie die Schlitten (28, 29) der Supporte selbst, mittels Arbeitsraumabdeckungen (11) gegenüber dem Arbeitsraum (31) abgeschottet sind und dabei insbesondere thermisch isolierend ausgebildet sind, und/oder insbesondere
- die Temperaturbestimmung an Klemmhaltern (53) und/oder Grundhaltern (52) nur an den für die Qualität des Bearbeitungsergebnisses kritischen Werkzeugen, insbesondere nur an Schlichtwerkzeugen, insbesondere nur an den die Durchmesser des Werkstückes bearbeitenden Schlichtwerkzeugen, vorgenommen wird.
(Kühlen:)

9. Werkzeugmaschine mit
- einem Bett (1),
- insbesondere wenigstens einer am Bett (1) angeordneten dreh- und antreibbaren Werkstückspindel (24) zur Aufnahme des Werkstückes (4) und
- einer Werkzeugaufnahmeeinheit, insbesondere einem Werkzeugrevolver (31),
**dadurch gekennzeichnet, dass**
die Werkzeugmaschine eine Kühlvorrichtung (35) zum Kühlen der Werkzeugaufnahmeeinheit, insbesondere des Werkzeugrevolvers (50), umfasst.

10. Werkzeugmaschine nach Anspruch 9,
**dadurch gekennzeichnet, dass**
- die Kühlvorrichtung (35) eine im Inneren der Werkzeugaufnahmeeinheit, insbesondere des Werkzeugrevolvers (50), angeordnete Kühlvorrichtung (35) ist, die mittels eines Kühlfluids betrieben wird, und/oder insbesondere
- die Kühlvorrichtung (35) einen geschlossenen Kühlkreislauf (36), insbesondere betrieben mittels eines flüssigen Kühlmittels, insbesondere eines Kältemittels umfasst.

11. Werkzeugmaschine nach einem der vorhergehenden Ansprüche,
**dadurch gekennzeichnet, dass**
- der Tank (T) des flüssigen Kühlmittels sowie ein eventueller Rückkühler (46) außerhalb des Werkzeugrevolvers (50), insbesondere am oder im Bett (1) der Werkzeugmaschine, angeordnet ist, und/oder insbesondere
- der Kühlkreislauf ein offener Kühlkreislauf (37), insbesondere durchströmt von einem gasförmigen Kühlmittel, insbesondere Druckluft, ist.

12. Werkzeugmaschine nach einem der vorhergehenden Ansprüche,
**dadurch gekennzeichnet, dass**
- die Austrittsöffnung, insbesondere Düse (45), der Druckluft am Ende des Kühlweges durch den Werkzeugrevolver (31) auf die Bearbeitungsstelle gerichtet ist, und/oder insbesondere
- die Kühlvorrichtung (35) mittels einer Steuerung, insbesondere der zentralen Maschinensteuerung, so gesteuert wird, dass das Maß der Kühlung in Abhängigkeit der durch den Bearbeitungsvorgang bewirkten Ist-Temperatur der Komponenten des Werkzeugkopfes und/oder der Ist-Temperatur des Kühlmediums gesteuert wird.
(Kompensieren und Kombinationen:)

13. Werkzeugmaschine mit
- einem Bett (1),
- insbesondere wenigstens einer am Bett (1) angeordneten dreh- und antreibbaren Werkstückspindel (24) zur Aufnahme des Werkstückes (4) und
- einer Werkzeugaufnahmeeinheit, insbesondere einem Werkzeugrevolver (50),
insbesondere nach einem der vorhergehenden Vorrichtungsansprüche,
**dadurch gekennzeichnet, dass**
die Werkzeugmaschine eine Temperaturbestimmungsvorrichtung mit einem Sensor, insbesondere mit einem Temperatursensor (48), umfasst.

14. Werkzeugmaschine nach Anspruch 13,
**dadurch gekennzeichnet, dass**
- der Temperatursensor (48) ein kontaktlos die Abtaststelle (39) überwachender Sensor, insbesondere ein Infrarotsensor (38), ist und insbesondere am Bett (1) der Werkzeugmaschine angeordnet ist, und/oder insbesondere
- der kontaktlose Sensor (48) auf den Werkzeugrevolver (50), insbesondere eine Abtaststelle (39) in der Nähe des im Einsatz befindlichen Schneideplättchens (54), und/oder auf den Werkzeughalter (42) des im Einsatz befindlichen Werkzeuges (3) und/oder auf das im Einsatz befindliche Schneideplättchen (54) selbst gerichtet ist.

15. Werkzeugmaschine nach einem der vorhergehenden Ansprüche,
**dadurch gekennzeichnet, dass**
- der Sensor (48) ein optischer Sensor, insbesondere ein Farbveränderungen ermittelnder Sensor ist und die Farbveränderung mittels der Steuerung in eine Temperatur bzw. Temperaturänderung umgerechnet wird, und/oder insbesondere
- der Temperatursensor (48) ein kontaktierender Sensor ist und am Werkzeugrevolver (50) angeordnet ist, insbesondere ringförmig um die Längsachse des Werkzeugsrevolvers (31) herum oder punktuell mehrfach über den Umfang und/oder radial verteilt angeordnet ist.

16. Werkzeugmaschine nach einem der vorhergehenden Ansprüche,
**dadurch gekennzeichnet, dass**
- die Steuerung der Werkzeugmaschine in der Lage ist, eine Kompensationsbewegung der Werkzeugaufnahmeeinheit, insbesondere des Werkzeugrevolvers (50), zu berechnen und zu steuern zur Kompensierung der Temperaturdehnung der Werkzeugaufnahmeeinheit, in Abhängigkeit des Maßes der Kühlung des Werkzeugrevolvers (31) und/oder der ermittelten Temperatur der Werkzeugaufnahmeeinheit, insbesondere des Werkzeugrevolvers (50), und/oder insbesondere
- die Werkzeugmaschine Arbeitsraumabdeckungen (11), insbesondere thermisch isolierende Abdeckungen, zwischen dem Arbeitsraum (31) und dem Bett (1) und/oder den Führungen (5) für die Werkzeugsupporte und/oder den Schlitten (28, 29) der Supporte aufweist.
